# EUROPEAN PATENT APPLICATION

(11) **EP 4 480 628 A1**
(43) Date of publication of application: **25.12.2024**
(21) Application number: 23181014.4
(22) Date of filing: 22.06.2023
(51) Int. Cl.: B23K 26/082, B23K 26/08, B23K 26/384, B23K 26/386, B23K 26/388

(54) **LASER MACHINING METHOD AND DEVICE**

(71) Applicant: Agathon AG, Maschinenfabrik, 4512 Bellach (CH)
(72) Inventor: Strähl, Philipp, 2540 Grenchen (CH); Brogle, Andreas, 4513 Langendorf (CH); Pfaff, Josquin, 8003 Zürich (CH); Marti, Jürg, 4500 Solothurn (CH)
(74) Representative: BOVARD AG

(57) **Abstract**

A method (100) and device (1) for laser machining a defined cutout in a workpiece (10), comprising generating a laser beam (20) propagating through a scanning unit (4) along a scanner axis (34), providing the workpiece (10) which is supported and held in a holder (11), and which is positionable relative to the scanner axis (34). The method further comprises defining a machining volume (22) of the workpiece (10) having a surface area (30) and a depth (d), determining a first relative position between the machining volume (22) and the scanner axis (34) in which the scanner axis (34) is orientated approximate perpendicular to a surface (21) of the machining volume (22), and positioning the workpiece (10) and/or the scanner axis (34) in the first relative position, and directing the laser beam (20) onto the machining volume (22) within the surface area (30), causing relative motion between the workpiece (10) and the laser beam (20), and scanning the laser beam (20) along a first cutting path (29). The removal of the first machining volume (22) results in a first cutout (25) with a first side wall (24) having a first taper characteristic (23). The method further includes defining a second machining volume (26) including the first side wall (24) and limited partly by a second side wall (27) with a predetermined characteristic (28), determining a second relative position between the second machining volume (26) and the scanner axis (34) and positioning the workpiece (10) and/or the scanner axis (34) in said second relative position, and orientating the scanner axis (34) relative to the workpiece (10) under a predetermined tilt angle (ß), directing the laser beam (20) onto the second machining volume (26), scanning the laser beam (20) along a second cutting path (36), and removing at least part of the second machining volume (26) to form the second side wall (27).

## Description

### Technical Field

The present invention relates to a laser machining method and device, in particular for forming zero and/or predetermined taper machined cuts, cutouts and/or holes in a workpiece.

### Background of the invention

Machining a workpiece of hard and/or brittle material such as metals, like stainless steel, light metals such as titanium, magnesium and aluminum, or ceramic, cermet, tungsten carbide, PCD diamond, CVD diamond, PCBN, and the like, with or without coating is known to be difficult. For example, drilling in indexable inserts made of superhard material an insert hole arrangement comprising a hole with or without one or two countersinks for permitting the insert to be secured to a toolholder is a challenge. To process such workpieces laser machining methods and devices are generally known but less known for drilling zero taper holes in indexable inserts by using a scanner unit.

It is known to use drill or cutting lasers for making holes, including high precision bore holes, or cuts in these workpieces. Laser drilling or cutting is advantageous because it is fast and highly flexible and can drill through bore holes as well as bore holes with complex shapes or can make high precision cuts. Compared to customary drilling methods with twist drills, in the case of hard material and/or small diameters of the hole to be machined laser drilling or cutting is cheaper due to contact-free machining avoiding wear and tear of the machining tools.

In laser machining, a laser beam generation device is used in conjunction with an optical system to direct the laser beam onto a workpiece to be machined. The impingement of the laser beam on the workpiece locally melts, vaporizes, and/or ablates workpiece material to produce or extend a hole or cut in the workpiece. The location of the impingement point on the workpiece may be controlled by moving one or both of the laser beam and the workpiece relative to one another to thereby control the geometry of the hole or cut. It is known that laser machining of holes produces tapered holes, for which an entry diameter is greater than a ground diameter of the hole or even an outlet diameter in the case of a through hole.

High precision and deep laser drilling of holes can be performed by trepanning or helical drilling. Trepanning or helical drilling uses a special optic allowing to change an incident angle of the laser beam and to move the laser beam along a rotative path with high speed. The workpiece remains stationary. Both of these processes require a complex optical setup to control a taper angle of the hole. Therefore, laser machining holes with no taper angle by these methods includes specific and complex equipment and methods which can only be used for hole drilling but not for other laser machining processes. These well-known methods are generally implemented on dedicated devices and cannot be implemented on conventional laser machine devices using a scanner unit.

Another approach to avoid undefined or unselected tapered edges is to move the workpiece physically, in particular moving a holding or clamping device in which the workpiece is supported while keeping the laser beam at the same incident angle. This method needs high precision for translational and/or rotational movements of the workpiece by the laser machining device about usually 4 or even 5 axes and a sophisticated control software to achieve a zero tapered or a defined tapered edge. Furthermore, additionally, or as alternative the laser system, in particular the scanner unit, can be moved relative to the workpiece.

From US2014263212 laser systems and methods are known for machining features in a workpiece. In particular, a beam coordination is described to control taper of cuts or kerfs made in the workpiece. To generate desirable taper characteristics of a side wall of the kerf by a focused laser beam propagated along a beam axis, the angle of incidence and azimuth of the beam axis can be moved relative to the workpiece. During the cutting process the workpiece and the beam axis are both in relative motion while the laser beam is actively machining the workpiece, in particular irradiates the workpiece along a cutting path. According to this document, the machined spot is moved off center using two linear axes, which leads to a defined incidence angle of the beam on the machined surface. The machining speed is slow due to the slower speed of these axes compared to the speed of optical axes, and due to the need to move the machined workpiece over long distances in order to achieve the desired incidence angle.

From US20120132629 a method and device for reducing taper in a kerf generated by laser processing or scribing is known. The method is based on strategic laser positioning for reducing taper of scribes or cuts. Accordingly, the method comprises aiming the laser beam onto the surface of the substrate in a first cutting direction and tilting the laser beam at a beam tilt angle, further aiming the laser beam at the surface of the substrate in a second direction perpendicular to the first cutting direction and tilting the laser beam at the tilt angle. The cut is formed by applying the laser beam to the surface of the substrate while aiming the laser beam and cutting in the first cutting direction and applying the laser beam to the surface of the substrate while aiming the laser beam in the second direction and cutting in one of the first cutting direction and the second cutting direction opposite the first cutting direction. The described method requires a specific device for tilting the beam which means lost in flexibility and reduced machining speed.

Therefore, an object of the invention is to provide a laser machining method and device, with which defined cutouts, large and deep bores and/or cuts can be produced with zero and/or predetermined taper angle, in particular negative taper angle, in high quality components. The laser machining device can use a scanner unit, such that the machining capabilities and throughputs are high. Another object is to provide a laser machining method and device eliminating post machining and cleaning operations, improving repeatability, reliability, velocity, and accuracy, and therefore reducing costs of manufacturing. Furthermore such laser machining method provides process flexibility, high cutting rates and non-contact operation.

### Summary of the invention

According to an aspect of the invention, there is provided a method for laser machining a defined cutout in a workpiece, comprising:
- generating a laser beam propagating through a scanner unit along a scanner axis,
- providing the workpiece, which is supported and held in a holder, and which is positionable relative to the scanner axis,
   wherein the method further comprises steps:
   a) defining a machining volume of the workpiece having a surface area and a depth,
   b) determining a first relative position between the machining volume and the scanner axis in which the scanner axis is orientated approximate perpendicular to the surface area of the machining volume, and positioning the workpiece and/or the scanner axis in the first relative position,
   c) directing the laser beam onto the machining volume within its surface area, causing relative motion between the workpiece and the laser beam, and scanning the laser beam along a first cutting path,
   d) removing at least part of the machining volume to form a first cutout with a first side wall having a first taper characteristic,
   e) defining a second machining volume including the first side wall and limited by a second side wall having a predetermined characteristic,
   f) determining a second relative position between the second machining volume and the scanner axis and positioning the workpiece and/or the scanner axis in said second relative position, and
   g) orientating the scanner axis relative to the workpiece under a predetermined tilt angle β, directing the laser beam onto the second machining volume, scanning the laser beam along a second cutting path and removing at least part of the second machining volume to form the second side wall.

According to the invention the method uses a combination of at least two different machining strategies. With a first machining strategy a laser beam is shone with an incidence angle close to 0°, i.e. normal to the surface of the workpiece to be machined, i.e. to a top surface of the defined machining volume, resulting in a high material removal rate, however resulting in a tapered characteristic. With a second strategy the laser beam is shone with a great incidence angle, typically > 80°. With this high incidence angle the material removal rate is lower than with the first strategy. However, a high surface quality is achievable and undesired taper angles resulting from the first strategy can be removed.

Furthermore, the method addresses the problems of taper angles resulting from laser machining using a scanning unit and of decreasing specific material removal rate by forming deep cutouts. By using multiple steps in the depthwise direction, the method allows controlling the scanned cutout characteristic for full material removal by repeating scans or repeating passes of the laser beam.

Achievable taper angles of cutting flanks using a scanning unit are typically > 5°. This is due to the reduction in laser intensity when projecting onto the inclined ablation flank, as a result of which ablation stops at a critical angle. Unlike conventional laser drilling methods using a scanner unit, the method described herein can enable formation of cutouts having a predetermined taper angle and quality parameters such as entry geometry, ground, or outlet geometry, contour accuracy, and surface characteristics. With the proposed laser machining method, positively conical, i.e. positive tapered, cylindrical, and also negative conical, i.e. negative tapered, holes as well as bore funnels, hour-shaped bores or bores of Laval-nozzle shape can be created.

The laser machining method is configured preferably to laser machine a workpiece made of hard, superhard and/or brittle material for example such used for indexable inserts or including a multilayered substrate comprising a plurality of layers of different material and/or different heights.

According to an embodiment, the machined cutout or formation in the workpiece is a blind hole, a through hole, a through hole with a countersink or chamfer at one or both ends of the through hole or a cutout with constant or varying cross section. One example of such cutout is a through hole with or without countersinks as an insert hole arrangement for permitting the insert to be secured to a toolholder.

The laser beam used for laser machining is generated under laser process parameters by means of a laser system with a scanner unit as an optical system. The scanner unit can be configured as a movable unit. The laser beam can pass through a set of optics prior to reaching the scanner unit to shape it. The laser beam may be prolongated through the scanner unit along the scanner axis. The laser beam is focused onto a surface of the workpiece typically by means of a focusing lens, arranged between the scanner unit and the workpiece. The scanner unit is configured to move the focal point of the laser beam in one plane, in particular in 2D, or preferably in 3D and/or scanned across over a desired area of the workpiece. In this case the laser beam is refracted, diffracted and/or reflected by optical means of the scanner unit to realize its movement on a surface of the workpiece. The scanner unit may be configured to provide a largely free, three-dimensional orientation of the impingement point and/or focal point of the laser beam onto the workpiece and hence on the machining space.

Furthermore, the method includes that the workpiece is supported and held in the holder and is positionable relative to the scanner axis. Additionally or alternatively to the controlled movement of the laser beam by means of the scanner unit, the holder can be configured for moving the supported workpiece relative to the scanner axis about at least one rotary axis and/or along at least one translational axis in a controlled manner. The laser beam is focused on a spot, and therefore a relative motion between the laser beam and the workpiece to be machined is needed to process the workpiece. The location of the laser beam focal point at the workpiece may be controlled by moving one or both of the laser beam and the workpiece relative to one another. Since the movement of the laser beam by means of the movable scanner unit is faster than the movement of the holder by means of device axes, the relative motion during removal of material is performed preferably by controlled movement of the laser beam via the scanner unit.

Between machining steps, the workpiece can be moved into a newly defined relative position by drives of the laser machining device with motion in translational and/or rotational directions. Alternatively, a hybrid movement can be used with the laser beam scanning across the workpiece while moving the workpiece in sequence.

According to an embodiment, the workpiece is moved in a controlled manner about multiple axes of a laser machining device into the determined relative positions such as a rotary A-axis and B-axis and a translational Z-axis. The scanner unit includes preferably three optical axes, X-, Y, and Z-axis.

The laser machining method comprises step a) to define a machining volume of the workpiece. The machining volume may be determined by one or more properties such as the surface area, in particular an entry perimeter, a bottom or ground or outlet perimeter and the depth or height or by a lateral surface from entry perimeter to bottom or outlet perimeter. Hereinafter, the surface area characterizes a surface portion of the workpiece to be machined limited by a perimeter having a circle, oval, ellipse, rectangle, or polygon or any other closed form. The machining volume might have a cylindrical form or a cone form or any other suitable three-dimensional form. Particularly, the machining volume might have a varying perimeter value and/or form over the depth. The surface area can be seen as the surface portion which will be machined at least partially.

According to the invention, a first relative position between the machining volume and the scanner axis is determined. Preferably, the scanner axis in this step b) is orientated approximate perpendicular, i.e. normal to the surface of the machining volume. By relative motion the workpiece and/or the scanner axis are brought in the determined first relative position. Preferably, the workpiece is moved into the first relative position by controlled activation of the device axes .

In step c) of the laser machining method the laser beam is directed along the scanner axis approximate perpendicular to the surface area onto the workpiece within this surface area. One or both of the laser beam and the workpiece are moved relative to one another causing the laser beam moving along a first cutting path. In other words, the laser beam is scanned along the first cutting path within the surface area. The first cutting path can be configured so that the surface portion to be machined can be traversed by the laser beam in different ways by appropriate control of the relative motion. For instance, the laser beam can be scanned along a spiral shaped curve, or a path along regularly spaced parallel lines. Alternatively, the laser beam may be scanned along a curve or a series of parallel curves or series of concentric circles with a specific offset between adjacent paths. Typically, when machining a hole, the surface area is limited by a perimeter which is a closed curve and in the case of the machining of a cylindrical hole such perimeter curve is circular. According to the invention, the form of this curve can as well include irregular shapes in the case of a free formed perimeter. Other scan or cutting paths are also possible for this removal. Depending on the defined cutout and the strategy of machining a central portion of the surface area could remain unmachined.

The first cutting path and/or a second cutting path may be defined by its shape, by starting point and end point as well as by a direction in which the laser beam is scanned across the surface portion. Varying the cutting path enables optimizing the specific material removal rate and ensures high-speed machining.

For machining the machining volume as well as machining further volumes the laser beam may be scanned several times across the surface area of the cutout using various scanning movements, such that the machining volume and any further removable machining volume can be removed layerwise. Each subsequent scan of the laser beam could have an axial offset between the scans of typically 0.1 to 25 µm, depending on material removal. Each subsequent scan of the laser beam might have an additional lateral offset. In other words, the surface portion to be scanned by a subsequent scan is smaller than the preceding one. The lateral offset depends on the geometry properties of the formation to be machined. By controlling scan velocity, laser power and other parameters such as starting point and/or end point of the cutting path, the depth of material removal in any one scan can be controlled.

Resulting of step d) the cutout in the machining volume has a first taper characteristic. The first taper characteristic is influenced by the material properties, machining parameters, and the machining volume and is typically > 5°. It can be determined experimentally. It can be beneficial to the overall machining duration to take this determinable taper characteristic in account when defining the machining volume, a so-called first machining volume.

The laser machining method according to the invention further comprises step e) defining a second machining volume comprising the first side wall with the first taper characteristic and stretching up to a second side wall with a predetermined characteristic. In the case that the first cutout is a hole, the second machining volume may have approximately a ring shape. The predetermined characteristic may include positive, zero and negative taper characteristic. Therefore, an entry diameter of the defined cutout to be machined, configured as a hole could be greater, equal, or smaller as a ground diameter or even an outlet diameter in the case of a through hole.

The defined second material volume is removed by relative positioning of the laser beam and/or the workpiece in a determined second relative position. Therefore, the laser beam may be directed under a predetermined tilt angle onto the second machining volume and irradiates this second machining volume while scanning the laser beam across thereof. Therefore, the laser beam is focused under laser process parameters at a surface portion of the second material volume to remove at least a portion of the second material volume to form the defined cutout with the predetermined characteristic. Machining of the second machining volume may be performed by successively removing layers of material by multiple scans of the laser beam with an axial and/or radial offset between scans.

By repeating the removal of the machining volume with the laser beam extending in the first direction perpendicular to the surface of the workpiece and then removing the second material volume with the laser beam orientated in another orientation as the first direction, in particular with a predetermined tilt angle, one can optimize the entire machining speed and ensures the predetermined characteristic of the side wall of the defined cutout.

Preferably, the predetermined tilt angle is greater than the radial laser beam divergence angle of the focused laser beam. The tilt angle depends on processing parameters and material properties and can be determined by experiments. Typically, the tilt angle is between 3 to 15°, preferably between 5° and 10°.

According to one embodiment, the laser machining method comprises that in step e) the second machining volume is divided into m sections and m is being m ≥ 1. Preferably m is between 1 and 4. In step f) a relative position between one of the m sections and the scanner axis is determined and said section and/or the scanner axis is positioned in this relative position and that in step g) the scanner axis is oriented under the predetermined beam tilt angle onto said section, irradiating said section by scanning the laser beam along the second cutting path and removing material from said section to form the second side wall of said section. Therefore, each of these sections is machined until the predetermined characteristic of this section is achieved before machining a next section. In this strategy, the relative position between the scanner axis and the selected section stays at the previously determined relative position until the second side wall of this section has turned into the predetermined form. Then the relative position is newly determined and by relative motion of the workpiece and/or the scanner axis another of the m sections is positioned in the newly determined relative position to be machined. This procedure is repeated until each of the m sections is machined, and the defined cutout with the predetermined characteristic is finished.

Dividing the second machining volume into m sections enables processing each of the m sections separately until the second machining volume is removed which may result in a further optimized machining speed and quality. By selecting an appropriate number of sections, each of the section can be machined under a suitable tilt angle.

The selected and positioned section of the m sections is machined by scanning the laser beam along the second cutting path in one or multiple scans with a second specific offset. The second cutting path may comprise a number of laser lines with lateral offset between the lines and/or can comprise a second cutting pattern. Preferably, the second cutting path or pattern may be generated by offsetting the perimeter curve, or a part of the perimeter curve, multiple times with a fixed offset between each curve, wherein the surface of the to-be removed machining volume is scanned. Typically, when machining a hole, such path is made of a section of the hole perimeter, repeated, and offset in concentric manner.

According to another embodiment of the laser machining method the machining volume defined in step a) is subdivided into n layers, each layer has a surface area, i.e. an individual surface area limited by an individual perimeter and a thickness and with n being n ≥ 1. Each of the n layers defines an individual machining volume to be removed by the two-step machining strategy described. The value of n, the number of the subdivisional layers, depends on the depth or height of the machining volume to be removed. Preferably, n lies between 2 and 10. The subdivision in n layers which are subsequently machined is advantageous in regard of material removal rate and thus machining time and of the side wall characteristic of the cutout.

Each of the defined first machining volumes are machined successively such that laser machining parameters can be adjusted individually to each of the n layers. Alternatively, each of the n layers can be processed under the same laser machining parameters. Adjustable process parameters for each of the n layers may ensure optimized machining through each of the n layers, in particular in the case of multilayered materials. The material of the first machining volume is removable in a sequence of machining steps from a top surface of the workpiece downwards.

The thickness of each of the n layer to be machined may be selected such to overcome the limitation on material removal rate which decreases as a function of depth into the workpiece. The thickness of each of the n layers may be typically between 0.1 and 2 mm depending on material properties and/or geometry properties of the defined cutout.

In the case the workpiece is a multilayered substrate, the thickness of at least one, or each of the n layers can correspond to the thickness of the at least one or each individual material layer. Alternatively, the thickness of at least one of the n layers can be determined by the change of material processed. In such case the thickness of the layer is determined by detecting the change of material to be processed, for example by an external inline or offline process control system. By selecting a suitable thickness for each of the n layers and/or by adjusting laser machining parameters according to detectable change of material the material removal rate can be kept maximized throughout the machining via optimizing the processing parameters for machining each material.

With the laser machining method the laser machining process can be optimized in regard to cycle time, throughput, flexibility, and higher process quality. In particular, scanning the laser beam across the workpiece along the first cutting path while directed in the first direction about perpendicular or normal to the surface area results in a specific high removal rate. However, a potentially undesired taper angle results, which can be adjusted by machining the second machining volume. Preferably, machining the first machining volume of the defined n layer and removing the second machining volume of each of the n layers before machining another of the n layers keeps the material removal rate approximately constant and at a high level. By removing the material of the taper it does not contribute to absorption of laser energy during machining deeper structures. Therefore, decreasing material removal rates due to scanning further downward in the same direction is avoided. Furthermore, with this method thermal effects can be reduced, improving the quality and repeatability of the machined cutouts.

In one embodiment, the machining of the defined cutout is performed from a top side and subsequently from a bottom side of the defined cutout, the cutouts from both sides join to form a single through cutout. This strategy of machining from both sides enables forming a cutout of curved and tapered and circular or freely formed wall structures. By this the machining velocity can be optimized due to further reduction of the overall depth and/or by adapting the first cutting path for each of the n layers.

A further step at the end of processing defined cutout can be performed for finishing the second side wall of the cutout by laser machining. This finishing step improves the overall quality of the machined surface over the entire cutout depth. According to an embodiment of the laser machining method, this finishing step includes subdividing the surface to be machined into multiple sectors and performing laser machining with a scanner axis orientated in a defined second tilt angle. Alternatively, the laser machining can be performed with the scanner axis orientated in another definable tilt angle.

Furthermore, the invention relates to a laser machining device for laser machining a defined cutout in a workpiece with the method according to the invention, comprising a laser system with a scanning unit used to move the laser beam in at least two coordinate directions and configured to generate a laser beam along a scanner axis and to direct the laser beam onto the workpiece approximate perpendicular to a surface area and to direct the laser beam onto the workpiece in a second cutting direction, a holder for supporting and holding the workpiece movable about at least one rotary axis and/or along at least one translational axis by means of drive units of the laser machining device, and at least one controller configured to scan the laser beam along a first cutting path and along a second cutting path and to control the drive units to move the workpiece to machine the defined cutout as well as to determine n layers successively machined by scanning the laser beam along the first cutting path and m sections machined by scanning the laser beam along the second cutting path. The controller can comprise a suitable processing unit for settings for controlling system hardware and processes, software and/or memory for operation of the laser machining device to perform the laser machining method.

The laser machining device may comprise one controller for controlled moving of mechanical axes related to the workpiece and optical axes related to the scanner unit. Alternatively, the laser machining device may comprise one controller configured for moving the workpiece about mechanical axes and another controller provided for moving optical axes of the scanner unit such that the laser beam is orientated towards the workpiece and scanned over a surface of the workpiece. Furthermore, the scanner unit of the laser machining device may be configured to be moved along and/or about mechanical axes while the workpiece is kept positioned during processing. Alternatively, the scanner unit may be kept positioned while the workpiece is moved along and/or about mechanical axes. Even furthermore, mechanical axes of the laser machining device may be provided to move the workpiece as well as the scanner unit for laser processing the workpiece according to the inventive method.

### Brief description of the drawings

For a more complete understanding of the invention and the advantages thereof, exemplary embodiments of the invention are explained in more detail in the following description with reference to the accompanying figures, in which like reference characters designate like parts and in which:
Fig. 1 is a schematic view of an embodiment of a laser machining device for implementing a laser machining method according to the invention;
Fig. 2 is a schematic view of a first machining phase to generate a first intermediate geometry of the workpiece illustrating a relative position between the laser beam and the workpiece;
Fig. 3a is a schematic view illustrating the workpiece subdivided in layers in a first intermediate state;
Fig. 3b is a schematic view of a machining volume removed from the workpiece in a first machining phase;
Fig. 4a is a schematic view of the workpiece machined in a second machining phase illustrating a relative position between the laser beam and the workpiece;
Fig. 4b is a schematic view of the workpiece with a second intermediate geometry;
Fig. 5 is a schematic top view of the second machining volume illustrating m sections in which the second machining volume is divided;
Fig. 6 is a schematic view of the workpiece in another intermediate state;
Fig. 7a is a schematic top view illustrating a first type of a first cutting path;
Fig. 7b is a schematic top view illustrating a second type of a first cutting path;
Fig. 7c is a schematic top view illustrating a third type of a first cutting path;
Fig. 8 is a schematic illustration of one embodiment of the laser machining method according to the invention.

### Detailed description of preferred embodiments

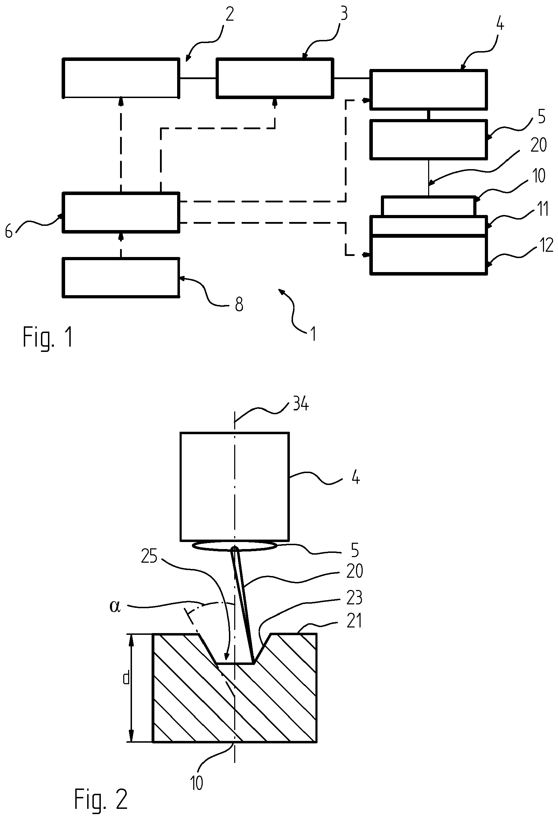

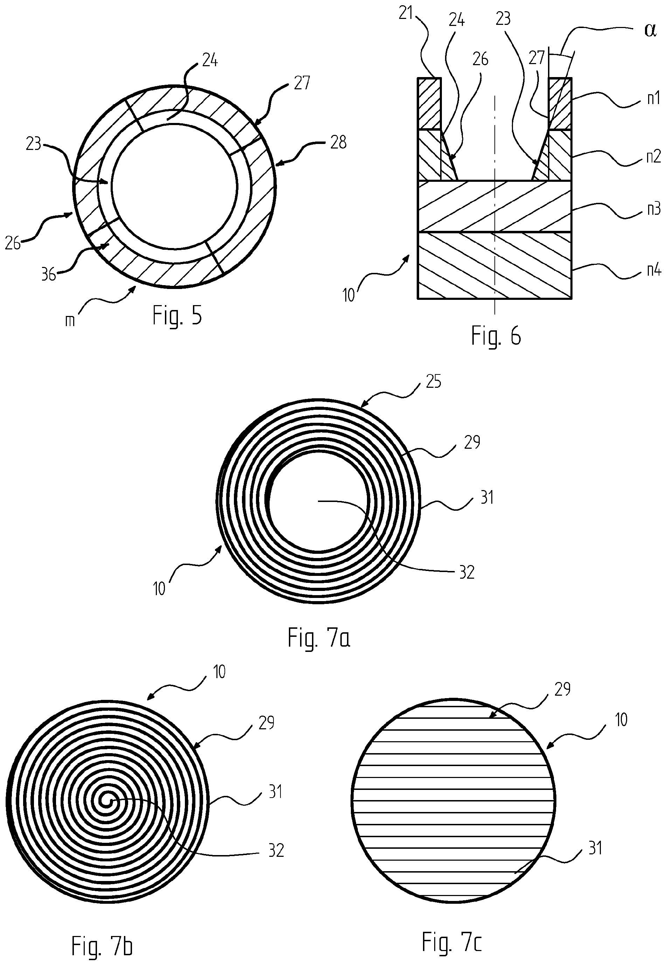

Fig. 1 shows a laser machining device 1 that can be used to implement the method according to the invention and described in detail in Fig. 7. The laser machining device 1 has a laser 2, which may be of any suitable type depending on the application. The laser 2 emits a laser beam 20 that is processed by an optical system 3 which may comprise optical components such as lenses, filters, beam expanders and/or even complex assemblies with temporal and spatial beam sharping optics depending upon the laser parameters determined. The laser beam 20 is then directed by a scanner unit 4 through focusing optics 5 onto a workpiece 10. The workpiece 10 is supported and held on a holder 11 or a chuck attached to motion stages 12. In this embodiment, the motion stages 12 are controlled by a controller 6 and is movable along mechanical axes such as translational axis and/or rotary axis.

According to one embodiment the motion stages 12 are configured for moving the workpiece. The motion stages 12 related to the holder 11 or chuck can be provided with rotary axes known as A-axis and/or B-axis and/or may comprise linear axis to move the workpiece into predetermined positions and/or to move the workpiece during laser machining. Any number of known designs can be used for motion stages 12 such that translational and/or rotational movements are included in laser machining device 1.

Additionally to the arrangement described in Fig. 1 the scanner unit 4 and/or focusing optics 5 could be configured as a movable unit attached to second motion stages 13 such to be movable along translational axis such as X-axis and Y-axis and optionally Z-axis and/or rotary axis. Therefore, the scanner unit 4 and/or the focusing optics 5 and the holder 11 are each movable in translational directions and/or about rotary axes.

Another option is that the holder 11 is mounted on a fixed base and the scanner unit 4 and/or the focusing optics 5 is movable by means of corresponding motion stages 13 (not shown), controlled by the controller 6.

According to Fig. 1 one controller 6 and a central processing unit (CPU) 8 are provided to control the movements of the workpiece by means of the motion stages 12 and to control the scanner unit 4 as well as the laser 2 and/or the optical system 3. The controller 6 and any further controller 7 (not shown) can generally include CPU 8, memory, and support circuits. The CPU can be of any type of computer processor used in laser machining devices for controlling device hardware and processes. The memory can be connected to the CPU 8 and can be one or more of a readily available memory such as random-access memory (RAM), read only memory (ROM), and other form of digital storage, local or remote. Software instructions and data can be coded and stored within the memory for instruction of the CPU 8. Command signals are generally output based on programming instructions stored in memory, and the functions of each of the programming instructions are performed by the logic of the CPU 8. Various elements of the laser machining device could include their own controllers that transmit data to and from a main controller along communication path.

Preferably, the controller 6 is adapted to control the motion stages 12 and/or the other motion stages 13 in order to provide relative motion between the scanner unit 4 and the workpiece 10 and to control movement of the axes of the scanner unit 4 in order to control movement of the laser beam. According to another embodiment the control for the relative positioning of the scanner unit 4 and the workpiece 10 and the control of the movement of the axes of the scanner unit 4 are separated: the further controller 7 may be provided to control the axes of the scanner unit 4 in order to control movement of the laser beam, while the controller 6 controls only the motion stages 12 and/or motion stages 13.

Fig. 2 is a schematic view of the workpiece 10. The workpiece 10 has a depth d for example 5 mm, extending from a surface 21. Fig. 2 shows an example workpiece 10 after forming a blind hole or a first cutout 25 by removing material by directing and scanning the laser beam 20 along a first cutting path 29 (not shown). The laser beam 20 is directed by means of the scanning unit 4 and the focusing lens 5 to the scanned surface 21 wherein a scanning axis 34 is normal or close to normal to the surface 21. The machining volume is removed by scanning the laser beam 20 in a spiral shape, or a succession of parallel lines, or along another scanning path such that the material volume is removed layerwise. The scanning path could have an axial and lateral offset between each scan.

As shown in Fig. 2 the first cutout 25 or in this case the blind hole has a first tapered characteristic 23 including a taper angle α, which corresponds to the angle between the interior wall of the first cutout 25 and a perpendicular to the surface 21. The taper angle α resulting from such machining using a scanner unit 4 is typically between 5° to 20°.

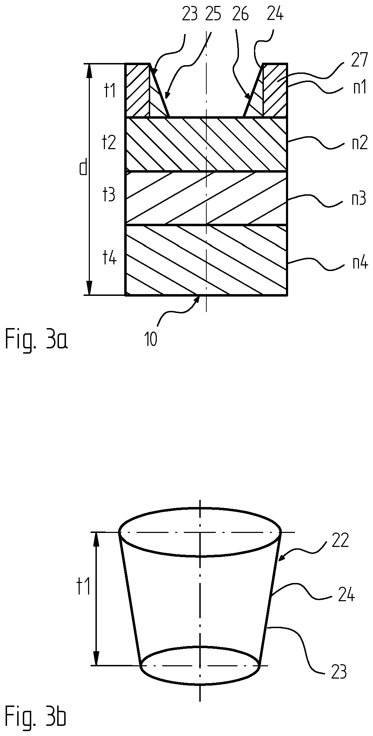

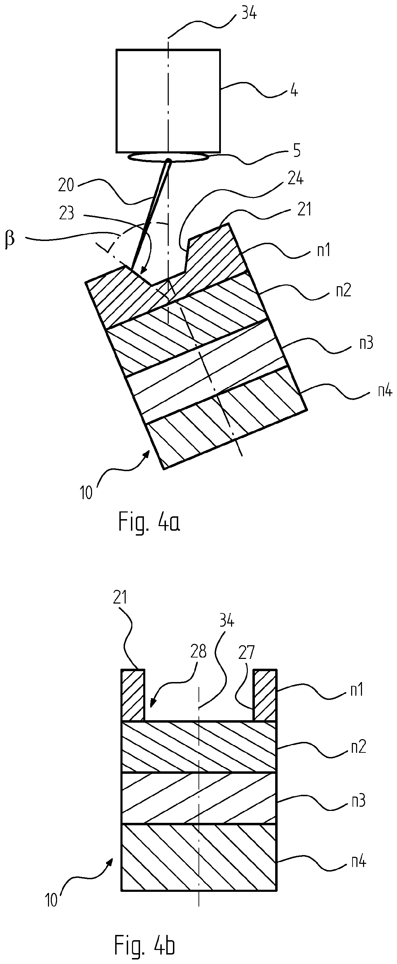

According to an example shown in Fig. 3a the depth d of the workpiece 10 is subdivided into n layers, wherein the number of the n layers depends on the depth d and laser machining constraints. In the example of Fig. 3a n is 4. Each layer n₁, n₂, n₃, n₄ can have an individual thickness t ranging between 0.1 mm to 2 mm, typically about 1 mm. After machining the machining volume 22 (shown in Fig. 3b) of the first layer n₁ the first cutout 25 has the first taper characteristic 23 including a straight, a concave or convex structured side wall 24. The first taper characteristic 23 can vary depending on material properties, processing parameters and/or the machining volume 22. A second machining volume 26, indicated in Fig. 3a by change in hatching, comprises the first side wall 24 and a second side wall 27 and will be machined in a following machining process, shown in Fig. 4a.

In the case that a through hole is machined in the workpiece 10 the laser beam 20 does not have to be scanned over the entire surface 21 of the machining volume to be removed, in order to have a faster machining process. A central portion can be kept which will be removed by falling out when the through hole is finished.

Fig. 3b is a schematic view illustrating the removed material volume 22 of the first layer n₁ removed in a first machining phase from the exemplary workpiece 10.

Fig. 4a is a schematic view of the workpiece 10 showing a machining step for removing the defined second machining volume 26 (not shown). The second machining volume 26 can be defined by the first side wall 24 with the first taper characteristic 23, or including this first side wall 24, and the predetermined second side wall 27 with a predetermined characteristic 28, as shown in Fig. 4b. Preferably the predetermined characteristic 28 has a zero taper angle such that the second side wall 27 (not shown) extends perpendicular from the surface 21 of the workpiece 10.

The second machining volume 26 can be removed by relative positioning the laser beam 20 and/or the workpiece 10 in a predetermined second relative position. The scanner axis 34 may be oriented under a predetermined tilt angle β in order to machine the second machining volume 26 and irradiates the second machining volume 26 while scanning the laser beam 20 across thereof. After machining the first layer n₁, a blind hole with zero taper results, as shown in Fig. 4b.

Fig. 5 shows in a schematic top view the second machining volume 26 to be removed. This illustrated second machining volume 26 is in this case limited by or includes the first side wall 24 with the first taper characteristic 23 and the second side wall 27 with the predetermined characteristic 28 and extends over the machining volume 22 or over the thickness t of the layer to be machined. The second machining volume 26 is subdivided into m sections. Depending on the shape and/or dimension of the second machining volume 26 the number m can vary ranging between 1 and 6, preferably about 4. Each of the m sections is laser machined by relative positioning one of the m sections and the scanner axis 34 in a predetermined relative position for irradiating this section by scanning the laser beam 20 along a second cutting path 36. In this embodiment die second cutting path 36 includes parallel straight lines but can have as well other structures. Each of the m sections may be machined until the second characteristic 28 of this section is achieved before rearranging the workpiece 10 and/or the scanner unit 4 for machining another of the m sections. Alternatively, the laser beam 20 is scanned across all of the m sections to remove the second machining volume 26 layerwise. The second cutting path 36 can vary in the scan direction and the scanning structure.

Fig. 6 is a schematic view of the workpiece 10 with another intermediate geometry, showing the workpiece 10 after machining the first layer n₁ and after performing a first step of machining a second layer n₂, in which the machining volume 22 of this second layer n₂ is removed. Therefore, the second layer n₂ comprises the first side wall 24 with the first taper characteristic 23. The first taper characteristic 23 of the second layer n₂ can be different from the first taper characteristic 23 of the first layer n₁ such that another taper angle α is formed.

Figures 7a, 7b and 7c each shows a top view of the workpiece 10, in particular shows a first cutting path 29 along which the laser beam 20 is scanned over the surface 21 to be machined. The cutout 25 represented in Fig. 7a is a hole with a circular surface area 30 limited by a perimeter 31. According to Fig. 7a the laser beam 20 is scanned across the surface portion to be machined in a spiral path with a specific distance between adjacent loops. The first cutting path 29 can vary from scan to scan in scan velocity, laser power and/or other parameters such as position of the starting point and/or end point and scanning direction. As shown in Fig. 7a a central portion remains unmachined after processing.

Fig. 7b shows another structure of the first cutting path 29 shaped as a spiral path with a starting point and/or end point of each scan in a centrum 32 or at the perimeter 31. As shown in Fig. 7b no central portion remains unmachined after processing.

Fig. 7c shows another first cutting path 29 configured as a repetition of parallel straight lines. The first cutting path 29 can be designed such that the material removal rate is optimized. In this embodiment the central portion is as well machined.

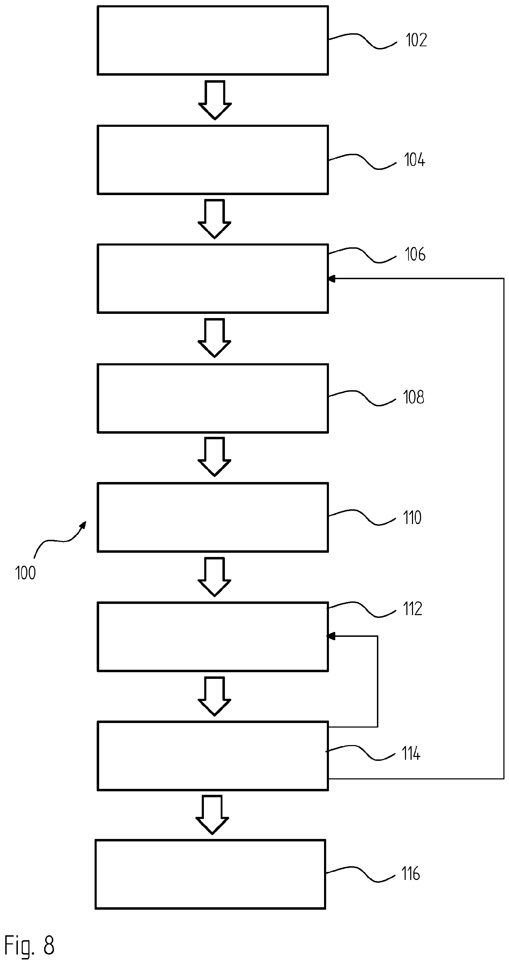

Fig. 8 shows an example laser machining method 100 for forming a defined cutout in the workpiece 10 according to at least one embodiment. The example method includes relative positioning 102 of the workpiece 10 held in the holder 11 and the laser beam 20 propagating through the scanner unit 4 and focusing optics 5. The laser machining method 100 further includes at operation 104, defining a machining volume of the workpiece comprising the surface area 30 limited by the perimeter 31 and the depth d and according to one embodiment subdividing the machining volume into n layers. Each layer is determined by the individual surface area 30 and a predetermined thickness t and defines the machining volume 22. Depending on the depth d of the machining volume in one embodiment n could be 1 such that the machining volume 22 corresponds to the machining volume of the layer. Furthermore, one or more properties of the defined cutout 25 could be determined, such as a top perimeter 31 corresponding to the cutout opening, a bottom perimeter, the first taper characteristic 23, etc. The example method 100 further includes the operation 106 determining a first relative position between one of the n layers to be machined, hereinafter the layer n₁, and the scanner axis 34 by controlled movement of the workpiece 10 by means of motion stages 12 and/or the scanner unit 4 and the focusing optics 5. In this relative position the scanner axis 34 is oriented about perpendicular to the surface 21 of the layer n₁ . In operation 108 the laser beam 20 emitted from laser 2 under laser machining parameters is focused on the surface 21. This operation 108 includes that the laser beam 20 is scanned along the first cutting path 29 within the surface area 30 limited by the perimeter 31 of the layer n₁. This operation can result in removing the machining volume 22 of this layer by multiple scanning of the laser beam 20 across the surface area 30, wherein with each scan a material layer is removed ranging between 0.1 and 25 µm.

The method 100 further includes an operation 110 for defining the second machining volume 26 between the first side wall 24 formed in the operation 108 and the predetermined second side wall 27 corresponding at least partly to the side wall of the defined cutout to be machined. This operation 110 could include that the second machining volume 26 is virtually subdivided in m sections which could be machined subsequently.

Operation 112 includes determining a second relative position between the second machining volume 26 and the scanner axis 34 and rearranging the workpiece 10 and/or the scanner axis 34 in that second relative position. In operation 112 the laser beam 20 is directed under a predetermined tilt angle β onto the second machining volume and laser process parameters could be adjusted based on the one or more properties of the method 100. In some embodiments the laser process parameters could include the laser power, a focal beam diameter, a focus height, a beam spot size, an offset of the laser beam 20 from precedent scans and/or a combination thereof.

The method 100 includes operation 114 in which at least a portion of the second machining volume 26 is removed under adjusted laser process parameters. According to method 100 each of the m sections of the second machining volume 26 are machined including rearrangement of the workpiece 10 and the scanner axis 34 such that optimal laser machining conditions are achieved for machining each of the sections. After the second machining volume 26 of the layer n₁ is removed the method 100 includes repeating the operations 106 to 114 until the cutout of the workpiece 10 has reached the defined form. In one embodiment the method 100 further includes another operation 116 to finish the formed side walls of the cutout.

This invention is not limited to the embodiments described but may be varied in construction and detail.

## Claims

1. A method (100) for laser machining a defined cutout in a workpiece (10), comprising:
- generating a laser beam (20) propagating through a scanning unit (4) along a scanner axis (34),
- providing the workpiece (10) which is supported and held in a holder (11), and which is positionable relative to the scanner axis (34),
wherein the method (100) further comprises steps:
a) defining a machining volume (22) of the workpiece (10) having a surface area (30) and a depth (d),
b) determining a first relative position between the machining volume (22) and the scanner axis (34) in which the scanner axis (34) is orientated approximate perpendicular to a surface (21) of the machining volume (22), and positioning the workpiece (10) and/or the scanner axis (34) in the first relative position,
c) directing the laser beam (20) onto the machining volume (22) within the surface area (30), causing relative motion between the workpiece (10) and the laser beam (20), and scanning the laser beam (20) along a first cutting path (29),
d) removing at least part of the machining volume (22) to form a first cutout (25) with a first side wall (24) having a first taper characteristic (23),
e) defining a second machining volume (26) including the first side wall (24) and limited partly by a second side wall (27) with a predetermined characteristic (28),
f) determining a second relative position between the second machining volume (26) and the scanner axis (34) and positioning the workpiece (10) and/or the scanner axis (34) in said second relative position, and
g) orientating the scanner axis (34) relative to the workpiece (10) under a predetermined tilt angle (β), directing the laser beam (20) onto the second machining volume (26), scanning the laser beam (20) along a second cutting path (36), and removing at least part of the second machining volume (26) to form the second side wall (27).

2. The method (100) according to claim 1, wherein in step e) the second machining volume (26) is divided into m sections with m ≥ 1, preferably 1 to 4, wherein in step f) a relative position between one of the m sections and the scanner axis (34) is determined and said section and/or the scanner axis (34) is positioned in this relative position and in step g) the scanner axis (34) is oriented under the predetermined tilt angle (β) onto said section, irradiating said section by scanning the laser beam (20) along the second cutting path (36) and removing material from said section to form the second side wall (27) of said section and repeating the steps e) to g) until the material of the second volume (26) is removed.

3. The method (100) according to claim 1 or claim 2, wherein the machining volume (22) of the workpiece (10) defined in step a) is subdivided into n layers, each layer determined by the surface area (30) limited by the perimeter (31) and a thickness (t) with n > 1, wherein each of the n layers defines the individual machining volume (22) of this layer which is machined according to steps b) to d) and the method includes repeating the steps b) to g) until the cutout of the workpiece (10) has reached the defined form.

4. The method (100) according to claim 3, wherein the thickness (t) of at least one of the n layers is determined by a detected change of material.

5. The method (100) according to any of the preceding claims, wherein the defined cutout in the workpiece (10) is a blind hole, a through hole, a through hole with a countersink at one or both ends of the through hole or a cutout with constant or varying cross section.

6. The method (100) according to any of the preceding claims, wherein the predetermined characteristic (28) includes positive, zero and negative taper characteristic.

7. The method (100) according to any of the claims 3 to 6, wherein the thickness (t) of the each of the n layers is 0.5 mm to 2 mm.

8. The method (100) according to any of the claims 3 to 7, wherein material from each of the n layers is removed by repeating scans of the laser beam (20) with an axial offset in direction of the scanner axis (34) between the scans of 0.1 µm to 25 µm.

9. The method (100) according to any of the preceding claims, wherein the first cutting path (29) has a spiral shape running from the perimeter (31) of the surface area (30) towards a center (32) of the surface area (30) or in the opposite direction or the first cutting path (29) is a series of offset curves of at least part of the perimeter (31).

10. The method (100) according to claims 1 to 8, wherein the first cutting path (29) is a pattern including a number of lines and/or intersecting lines with a lateral offset between them.

11. The method (100) according to one of the preceding claims, wherein the predetermined tilt angle (β) is greater than a divergence angle of the laser beam, typically ranging from 3° to 15°.

12. The method (100) according to claim 1 or claims 3 to 11, wherein the second machining volume (26) is machined layerwise by multiple scans of the laser beam (20) with an axial offset until the predetermined characteristic (28) is achieved.

13. The method (100) according to one of the claims 2 to 11, wherein each of the m sections of the second machining volume (26) is machined until the predetermined characteristic (28) of said section is achieved, before machining a next section of the m sections.

14. The method (100) according to one of the preceding claims, wherein machining of the defined cutout is performed from a top side, and subsequently from a bottom side of the defined cutout, the cutouts join to form a single through cutout.

15. Laser machining device (1) for laser machining a defined cutout in a workpiece (10) with the method according to one of the claims 1 to 14, comprising
- a laser system with a scanner unit (4) comprising at least an optical axis and at least a mechanical axis configured to generate a laser beam (20) along a scanner axis (34), to direct the laser beam (20) onto the workpiece (10) in a first cutting direction approximate perpendicular to a surface (21) of the workpiece and to direct the laser beam (20) onto the workpiece (10) in a second cutting direction,
- a holder (11) for supporting and holding the workpiece (10) and movable about at least one rotary axis and/or along at least one translational axis by means of drive units of the laser machining device (1),
along the second cutting path (36) and/or to control at least one mechanical axis of the laser machining device (1) to move the workpiece (10) to machine the defined cutout.
